# EUROPÄISCHE PATENTSCHRIFT

(11) **EP 4 294 239 B1**
(45) Veröffentlichungstag und Bekanntmachung des Hinweises auf die Patenterteilung: **12.03.2025**
(21) Anmeldenummer: 22713285.9
(22) Anmeldetag: 26.01.2022
(51) Int. Cl.: A47G 29/20, G06Q 10/08, B64D 1/12, A47G 29/14

(54) **TRANSPORTBEHÄLTER ZUR AUFNAHME VON WAREN UND SYSTEM ZUM TRANSPORT VON WAREN**
TRANSPORT CONTAINER FOR ACCOMMODATING GOODS, AND SYSTEM FOR TRANSPORTING GOODS
CONTENEUR DE TRANSPORT DESTINÉ À RECEVOIR DES MARCHANDISES, ET SYSTÈME DE TRANSPORT DE MARCHANDISES

(30) Priorität: 18.02.2021 DE 102021000837
(43) Veröffentlichungstag der Anmeldung: 27.12.2023
(73) Patentinhaber: SEW-EURODRIVE GmbH & Co. KG, 76646 Bruchsal (DE)
(72) Erfinder: SCHMIDT, Josef, 76676 Graben-Neudorf (DE); SCHÖNUNG, Frank, 76676 Graben-Neudorf (DE); DAHL, Theodor, 76646 Bruchsal (DE); WINTER, Maximilian, 69115 Heidelberg (DE); MÜNSTER, Lars, 76133 Karlsruhe (DE); HERRLING, Yannick, 76698 Ubstadt-Weiher (DE)
(86) Internationale Anmeldenummer: PCT/EP2022/051769
(87) Internationale Veröffentlichungsnummer: WO 2022/175039

(56) Entgegenhaltungen:
- GB-A- 2 360 197
- KR-B1- 101 807 698
- US-A1- 2018 265 222
- US-A1- 2018 330 561
- US-B2- 10 435 156
- US-B2- 10 909 648

## Beschreibung

Die Erfindung betrifft einen Transportbehälter zur Aufnahme von Waren, welcher eine Bodenplatte und eine Verriegelungsvorrichtung zur Verriegelung mit einer Übergabestation umfasst. Die Erfindung betrifft auch ein System zum Transport von Waren, welches mindestens einen erfindungsgemäßen Transportbehälter umfasst.

Es sind Systeme zum Transport von Waren bekannt, welche fahrerlose Transportfahrzeuge aufweisen. Mittels eines solchen fahrerlosen Transportfahrzeugs können Transportbehälter, beispielsweise Kisten oder Paletten, insbesondere zu definierten Übergabestationen transportiert werden. Die Transportbehälter dienen zur Aufnahme von den zu transportierenden Waren. Transportbehälter mit den zu transportierenden Waren werden von den fahrerlosen Transportfahrzeugen an einer Übergabestation positioniert und stehen dort für einen Empfänger bereit.

Die Lieferung von Waren insbesondere an private Empfänger verursacht für Zulieferer dabei einen hohen Aufwand verbunden mit hohen Kosten. Problematisch ist dabei insbesondere, dass private Empfänger unregelmäßig Waren erhalten, und dass private Empfänger oft nicht persönlich anwesend sind, um bestellte Waren entgegen zu nehmen. Wenn ein Transportbehälter mit Waren einfach auf einem Grundstück abgestellt wird, so besteht die Gefahr eines Diebstahls der Waren oder des Transportbehälters mit den Waren. In der Folge müssen bestellte Waren bei Abwesenheit des Empfängers oft mehrfach zugestellt und in der Zwischenzeit gelagert werden.

Aus der DE 10 2013 013 021 A1 ist ein Lagersystem mit einem Kettentrieb bekannt, welches eine mittels eines Kettenrads antreibbare Kette aufweist, wobei ein Speicherboden, insbesondere zur Aufnahme von Transportgütern, von der Kette bewegbar ist.

Aus der US 2020/0040625 A1 ist eine Verriegelungsvorrichtung für einen Kühlschrank bekannt, welche einen ersten Verriegelungsblock und einen zweiten Verriegelungsblock aufweist.

Aus der DE 2 124 828 A ist ein Schnappschloss für Betätigung von außen mittels Druckstift bekannt.

Aus der EP 3 287 400 A1 ist ein Liefersystem bekannt, welches ein Lieferfahrzeug zum Transportieren einer Lieferbox und ein Trägerfahrzeug zum Transportieren des Lieferfahrzeugs umfasst.

Aus der DE 102 32 469 A1 ist ein Transportsystem bekannt, welches einen Transportbehälter und einen Transportwagen umfasst.

Aus der WO 2020/258407 A1 ist eine Schutzvorrichtung für einen elektrischen Steuerschrank bekannt.

Aus der DE 30 40 479 A1 ist ein Behälter bekannt, welcher einen aus zwei verriegelbaren Klappen bestehenden Boden aufweist.

Aus der US 2018/0330561 A1 sind ein System und ein Verfahren zur Lieferung von Waren bekannt. Es ist ein Transportbehälter zur Aufnahme von Waren vorgesehen, welcher an einem Transportfahrzeug verriegelbar ist. US 2018/330561 A1 offenbart einen Transportbehälter nach dem Oberbegriff des Anspruchs 1.

Aus der GB 2 360 197 A ist ein Sicherungssystem für Transportbehälter bekannt. Das System umfasst zwei Arme, an denen ein Transportbehälter verriegelbar ist. Die Arme sind um eine horizontale Achse schwenkbar.

Aus der KR 10-1807698 B1 ist ein Transportbehälter bekannt, welcher an einer Drohne befestigbar ist.

Der Erfindung liegt die Aufgabe zugrunde, einen Transportbehälter zur Aufnahme von Waren sowie ein System zum Transport von Waren zu verbessern.

Die Aufgabe wird erfindungsgemäß durch einen Transportbehälter zur Aufnahme von Waren mit den in Anspruch 1 angegebenen Merkmalen gelöst. Vorteilhafte Ausgestaltungen und Weiterbildungen sind Gegenstand der Unteransprüche. Die Aufgabe wird erfindungsgemäß auch durch ein System zum Transport von Waren mit den in Anspruch 10 angegebenen Merkmalen gelöst. Vorteilhafte Ausgestaltungen und Weiterbildungen sind Gegenstand der Unteransprüche.

Ein erfindungsgemäßer Transportbehälter zur Aufnahme von Waren umfasst eine Bodenplatte und eine Verriegelungsvorrichtung zur Verriegelung mit einer Übergabestation. Dabei weist die Verriegelungsvorrichtung mindestens einen in eine Längsrichtung relativ zu der Bodenplatte beweglichen Schlitten auf, welcher mindestens einen Verriegelungsbolzen umfasst. Dabei ist der mindestens eine Schlitten derart angeordnet und ausgestaltet, dass beim Einführen eines Dorns in eine Einführöffnung der Bodenplatte in eine Vertikalrichtung eine Bewegung des mindestens einen Schlittens in die Längsrichtung entgegen einer Federkraft erfolgt, und dass bei Abwesenheit eines Dorns in der Einführöffnung die Federkraft den mindestens einen Schlitten derart beaufschlagt, dass der mindestens eine Verriegelungsbolzen in der Längsrichtung teilweise aus einer Stirnseite der Bodenplatte heraus ragt. Die Längsrichtung verläuft dabei rechtwinklig zu der Vertikalrichtung.

Der erfindungsgemäße Transportbehälter ist automatisch mit einer Übergabestation verriegelbar. Durch Entfernen des Dorns aus der Einführöffnung fährt der Verriegelungsbolzen aus und verriegelt mit einem entsprechenden Gegenstück, beispielsweise mit einer Nutschiene. Durch Einführen des Dorns wird der Verriegelungsbolzen in die Bodenplatte hinein gezogen und die Verriegelung wird aufgehoben.

Gemäß einer bevorzugten Ausgestaltung der Erfindung weist der mindestens eine Schlitten eine Kontaktfläche zum Kontakt mit einem Dorn auf, wobei die Kontaktfläche geneigt zu der Längsrichtung und geneigt zu der Vertikalrichtung verläuft. Der Schlitten weist also eine schräge Kontaktfläche auf, welche an dem Dorn abgleitet.

Gemäß einer vorteilhaften Weiterbildung der Erfindung umfasst der mindestens eine Schlitten zwei Verriegelungsbolzen, welche in einer Querrichtung versetzt zueinander angeordnet sind. Die Querrichtung verläuft dabei rechtwinklig zu der Vertikalrichtung und rechtwinklig zu der Längsrichtung. Mit zwei Verriegelungsbolzen wird die Verriegelungskraft der Verriegelungsvorrichtung erhöht.

Gemäß einer vorteilhaften Ausgestaltung der Erfindung weist die Verriegelungsvorrichtung einen ersten Schlitten und einen zweiten Schlitten auf, welche derart angeordnet und ausgestaltet sind, dass beim Einführen eines Dorns in eine erste Einführöffnung der Bodenplatte in die Vertikalrichtung eine Bewegung des ersten Schlittens in die Längsrichtung entgegen einer Federkraft erfolgt, und dass bei Abwesenheit eines Dorns in der ersten Einführöffnung die Federkraft den ersten Schlitten derart beaufschlagt, dass der mindestens eine Verriegelungsbolzen des ersten Schlittens in der Längsrichtung teilweise aus einer ersten Stirnseite der Bodenplatte heraus ragt, und dass beim Einführen eines Dorns in eine zweite Einführöffnung der Bodenplatte in die Vertikalrichtung eine Bewegung des zweiten Schlittens in die Längsrichtung entgegen einer Federkraft erfolgt, und dass bei Abwesenheit eines Dorns in der zweiten Einführöffnung die Federkraft den zweiten Schlitten derart beaufschlagt, dass der mindestens eine Verriegelungsbolzen des zweiten Schlittens in der Längsrichtung teilweise aus einer zweiten Stirnseite der Bodenplatte heraus ragt. Die zweite Stirnseite liegt dabei in Längsrichtung der ersten Stirnseite gegenüber. Mit zwei derartig angeordneten Schlitten wird die Verriegelungskraft der Verriegelungsvorrichtung signifikant erhöht.

Gemäß einer bevorzugten Weiterbildung der Erfindung weist die Verriegelungsvorrichtung mindestens einen in die Längsrichtung relativ zu der Bodenplatte beweglichen Rastbolzen auf, wobei eine Federkraft den mindestens einen Rastbolzen derart beaufschlagt, dass bei Abwesenheit einer Gegenkraft der mindestens eine Rastbolzen in der Längsrichtung teilweise aus einer Stirnseite der Bodenplatte heraus ragt. Der Rastbolzen dient der Fixierung des Transportbehälters an einem entsprechenden Gegenstück, beispielsweise an einer Nutschiene, während der Dorn in die Einführöffnung hinein oder heraus bewegt wird.

Gemäß einer vorteilhaften Ausgestaltung der Erfindung weist der mindestens eine Rastbolzen eine Rastfläche zum Kontakt mit einer Nutschiene auf, wobei die Rastfläche geneigt zu der Längsrichtung und geneigt zu der Vertikalrichtung verläuft. Der Rastbolzen weist also eine schräge Rastfläche auf, welche bei einer Bewegung des Transportbehälters in Vertikalrichtung an der Nutschiene abgleitet.

Gemäß einer vorteilhaften Weiterbildung der Erfindung weist die Verriegelungsvorrichtung mindestens zwei Rastbolzen auf, welche in einer Querrichtung versetzt zueinander angeordnet sind.

Gemäß einer bevorzugten Weiterbildung der Erfindung weist die Verriegelungsvorrichtung mindestens zwei Rastbolzen auf, wobei eine Federkraft einen der Rastbolzen derart beaufschlagt, dass bei Abwesenheit einer Gegenkraft der besagte Rastbolzen in der Längsrichtung teilweise aus einer ersten Stirnseite der Bodenplatte heraus ragt, und wobei eine Federkraft einen der Rastbolzen derart beaufschlagt, dass bei Abwesenheit einer Gegenkraft der besagte Rastbolzen in der Längsrichtung teilweise aus einer zweiten Stirnseite der Bodenplatte heraus ragt.

Gemäß einer vorteilhaften Weiterbildung der Erfindung weist die Verriegelungsvorrichtung mindestens eine Anzugsplatte aus einem ferromagnetischen Material auf, welche derart angeordnet ist, dass ein in die Einführöffnung eingeführter Dorn in Kontakt mit der Anzugsplatte gelangt. Wenn der Dorn einen Magnet aufweist, so wirkt dieser mit der Anzugsplatte zusammen zur Sicherung des Transportbehälters während des Transports.

Ein erfindungsgemäßes System zum Transport von Waren umfasst mindestens einen erfindungsgemäßen Transportbehälter, mindestens ein fahrerloses Transportfahrzeug zum Transport des mindestens einen Transportbehälters und mindestens eine Übergabestation, mit welcher der mindestens eine Transportbehälter verriegelbar ist. Das erfindungsgemäße System gestattet einen Transport des Transportbehälters mittels des fahrerlosen Transportfahrzeugs und eine Verriegelung des Transportbehälters mit der Übergabestation.

Gemäß einer bevorzugten Ausgestaltung der Erfindung weist die mindestens eine Übergabestation mindestens eine Nutschiene auf, welche zur Verriegelung eines Transportbehälters mit der Übergabestation mit mindestens einem Verriegelungsbolzen und/oder mit mindestens einem Rastbolzen der Verriegelungsvorrichtung des Transportbehälters zusammenwirkt. Die Nutschiene ermöglicht somit die Verriegelung des Transportbehälters mit der Übergabestation.

Gemäß einer vorteilhaften Weiterbildung der Erfindung weist das mindestens eine fahrerlose Transportfahrzeug einen ersten Dorn und einen zweiten Dorn auf, wobei die Dorne derart angeordnet und ausgestaltet sind, dass die Dorne gleichzeitig in je eine Einführöffnung der Bodenplatte eines Transportbehälters einführbar sind. Die zwei Dorne ermöglichen die Ansteuerung von zwei Schlitten des Transportbehälters. Zusätzlich fixieren die zwei Dorne die Bodenplatte des Transportbehälters formschlüssig während des Transports.

Gemäß einer vorteilhaften Ausgestaltung der Erfindung weist mindestens einer der Dorne dabei einen Magnet auf, wobei der Magnet beim Einführen des Dorns in die Einführöffnung der Bodenplatte mit mindestens einer Anzugsplatte des Transportbehälters zusammenwirken. Der Dorn wirkt mit der Anzugsplatte zusammen zur Sicherung des Transportbehälters während des Transports durch das Transportfahrzeug.

Gemäß einer vorteilhaften Weiterbildung der Erfindung weist das mindestens eine fahrerloses Transportfahrzeug eine Hubplatte aus einem ferromagnetischen Material auf, auf welcher die

Dorne angeordnet sind. Die Dorne sind dabei ebenfalls aus einem ferromagnetischen Material gefertigt. Durch diese Ausgestaltung entsteht, wenn mindestens einer der Dorne einen Magnet aufweist, ein magnetischer Kreis durch die Dorne, die Hubplatte und die Anzugsplatte des Transportbehälters. Dadurch ist der Transportbehälter während des Transports durch das Transportfahrzeug noch besser gesichert.

Die Erfindung wird nun anhand von Abbildungen näher erläutert. Die Erfindung ist nicht auf die in den Abbildungen dargestellten Ausführungsbeispiele beschränkt. Die Abbildungen stellen den Gegenstand der Erfindung nur schematisch dar. Es zeigen:
- Figur 1:: ein System zum Transport von Waren,
- Figur 2:: eine Draufsicht auf eine Bodenplatte eines Transportbehälters,
- Figur 3:: eine Schnittdarstellung entlang der Schnittlinie A-A in Figur 2,
- Figur 4:: eine Schnittdarstellung entlang der Schnittlinie B-B in Figur 2,
- Figur 5:: eine weitere Schnittdarstellung entlang der Schnittlinie B-B in Figur 2,
- Figur 6:: eine weitere Schnittdarstellung entlang der Schnittlinie B-B in Figur 2,
- Figur 7:: eine weitere Schnittdarstellung entlang der Schnittlinie A-A in Figur 2,
- Figur 8:: eine weitere Schnittdarstellung entlang der Schnittlinie A-A in Figur 2,
- Figur 9:: eine weitere Draufsicht auf die Bodenplatte des Transportbehälters,
- Figur 10:: eine weitere Schnittdarstellung entlang der Schnittlinie B-B in Figur 2,
- Figur 11:: einen Schnitt durch eine Bodenplatte auf einer Hubplatte gemäß einer Abwandlung und
- Figur 12:: eine Schnittdarstellung entlang der Schnittlinie A-A in Figur 11.

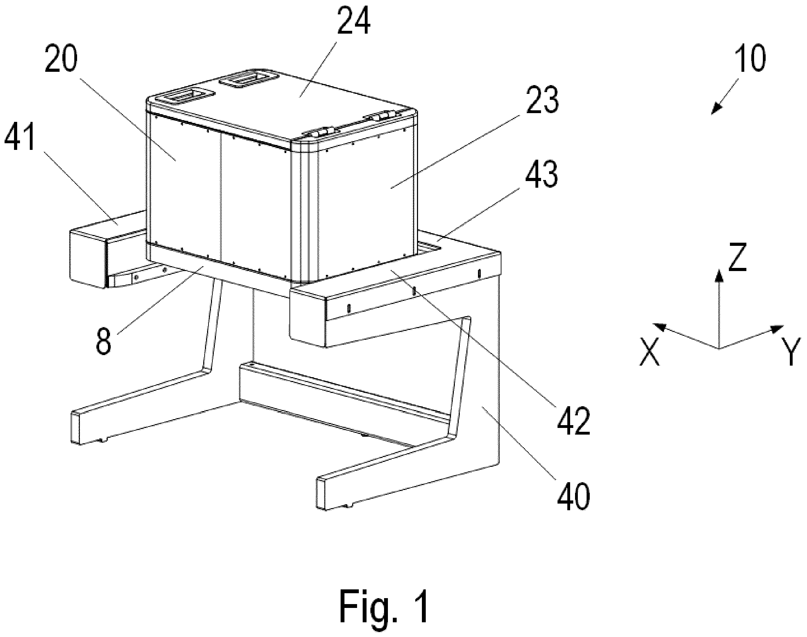

Figur 1 zeigt ein System 10 zum Transport von Waren. Das System 10 umfasst einen zur Aufnahme von Waren, ein hier nicht dargestelltes fahrerloses Transportfahrzeug zum Transport des Transportbehälters 20 und eine Übergabestation 40. In der hier gezeigten Darstellung ist der Transportbehälter 20 an der Übergabestation 40 positioniert und mit dieser verriegelt. Das System 10 dient vorliegend zur Lieferung von Waren zu einem privaten Empfänger. Die Übergabestation 40 befindet sich dazu beispielsweise vor einem Wohnhaus, in welchem der private Empfänger wohnt.

Die Übergabestation 40 weist einen annähernd U-förmigen Querschnitt auf und umfasst einen ersten Seitenschenkel 41, einen zweiten Seitenschenkel 42 und einen dritten Seitenschenkel 43. Der erste Seitenschenkel 41 und der zweite Seitenschenkel 42 verlaufen parallel zueinander und erstrecken sich in eine Querrichtung Y. Der dritte Seitenschenkel 43 verläuft in eine Längsrichtung X und verbindet den ersten Seitenschenkel 41 und den zweiten Seitenschenkel 42. Die Seitenschenkel 41, 42, 43 sind auf einem Gestell angeordnet und befinden sich in einer Vertikalrichtung Z von einem Boden beabstandet.

Die Vertikalrichtung Z verläuft dabei rechtwinklig zu dem Boden. Die Querrichtung Y verläuft rechtwinklig zu der Vertikalrichtung Z. Die Längsrichtung X verläuft rechtwinklig zu der Querrichtung Y und rechtwinklig zu der Vertikalrichtung Z. Die Längsrichtung X und die Querrichtung Y verlaufen somit horizontal und rechtwinklig zu dem Boden.

Das Gestell ist in dem Boden fest verankert. Somit ist die Übergabestation 40 gegen Diebstahl gesichert. Der erste Seitenschenkel 41 und der zweite Seitenschenkel 42 sind in der Längsrichtung X beabstandet voneinander angeordnet. Zwischen den besagten Seitenschenkeln 41, 42 ist ein Aufnahmebereich zur Aufnahme des Transportbehälters 20 gebildet.

Das hier nicht dargestellte fahrerlose Transportfahrzeug umfasst ein Chassis sowie eine Mehrzahl von Laufrädern. Zumindest ein Teil der Laufräder ist von einem Motor antreibbar. Das fahrerlose Transportfahrzeug umfasst auch einen elektrischen Energiespeicher zur Versorgung des Motors. Auch ist zumindest ein Teil der Laufräder lenkbar. Alternativ besitzt das fahrerlose Transportfahrzeug eine Differentiallenkung. Dabei sind die Laufräder nicht lenkbar, aber durch unterschiedliche Geschwindigkeiten der Laufräder 34 auf beiden Seiten ist das fahrerlose Transportfahrzeug lenkbar, ähnlich wie bei einem Kettenantrieb eines Panzers oder eines Baggers.

Das fahrerlose Transportfahrzeug umfasst ferner eine Hubeinheit, mittels welcher ein auf dem Transportfahrzeug befindlicher Transportbehälter 20 in die Vertikalrichtung Z relativ zu dem Chassis bewegbar ist. Die Hubeinheit weist dazu eine Hubplatte 35 auf, welche in den nachfolgenden Figuren erläutert wird.

Der Transportbehälter 20 umfasst ein Grundgehäuse 23, eine Bodenplatte 8 und einen Deckel 24. Die Bodenplatte 8 ist fest mit dem Grundgehäuse 23 verbunden. Der Deckel ist relativ zu dem Grundgehäuse 23 schwenkbar. In der hier gezeigten Darstellung ist das Grundgehäuse 23 mittels dem Deckel 24 verschlossen. Das Grundgehäuse 23, die Bodenplatte 8 und der Deckel 24 umgeben einen hier verdeckten Hohlraum, in welchen zu transportierende Waren einsetzbar sind.

Der Transportbehälter 20 weist eine Verriegelungsvorrichtung auf, welche mit dem fahrerlosen Transportfahrzeug sowie der Übergabestation 40 zusammen wirkt. Insbesondere ist der Transportbehälter 20 mittels der Verriegelungsvorrichtung mit der Übergabestation 40 verriegelbar und dadurch vor Diebstahl geschützt.

Der Transportbehälter 20 weist auch ein hier nicht dargestelltes Verriegelungsmodul auf, mittels welchem der Deckel 24 mit dem Grundgehäuse 23 verriegelbar ist. Wenn der Deckel 24 mit dem Grundgehäuse 23 verriegelt ist, so sind in dem Hohlraum 25 befindliche Waren vor unbefugtem Zugriff geschützt.

Zum Transport von Waren mittels des Systems 10 werden die Waren, die zu der Übergabestation 40 zu transportieren sind, zunächst in den Hohlraum des Transportbehälters 20 eingesetzt. Anschließend wird der Deckel 23 des Transportbehälters 20 geschlossen und durch das Verriegelungsmodul mit dem Grundgehäuse 23 verriegelt. Der Transportbehälter 20 wird auf dem fahrerlosen Transportfahrzeugs fixiert oder mit diesem verriegelt. Anschließend wird der Transportbehälter 20 von dem fahrerlosen Transportfahrzeug zu der Übergabestation 40 transportiert und an der Übergabestation 40 verriegelt.

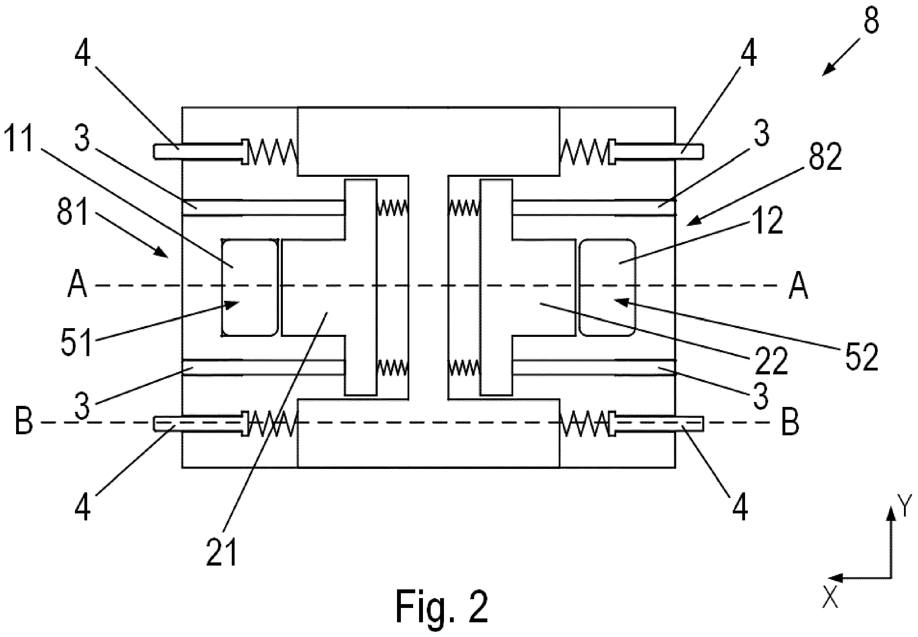

Figur 2 zeigt eine Draufsicht auf eine Bodenplatte 8 mit einer Verriegelungsvorrichtung eines Transportbehälters 20. Die Verriegelungsvorrichtung ist weitgehend in der Bodenplatte 8 angeordnet. In der hier gezeigten Darstellung befindet sich der Transportbehälter 20 auf einem fahrerlosen Transportfahrzeug und wird von diesem gerade zu einer Übergabestation 40 transportiert.

Die Bodenplatte 8 weist eine erste Einführöffnung 51 und eine zweite Einführöffnung 52 auf. Die Einführöffnungen 51, 52 sind in Längsrichtung X versetzt zueinander angeordnet. Die Bodenplatte 8 weist eine erste Stirnseite 81 und eine zweite Stirnseite 82 auf. Die Stirnseiten 81, 82 verlaufen parallel zueinander und rechtwinklig zu der Längsrichtung X. Die erste Einführöffnung 51 ist nahe der ersten Stirnseite 81 angeordnet, die zweite Einführöffnung 52 ist nahe der zweiten Stirnseite 82 angeordnet.

Die Verriegelungsvorrichtung weist einen ersten Schlitten 21 auf, welcher in Längsrichtung X relativ zu der Bodenplatte 8 beweglich ist. Der erste Schlitten 21 umfasst zwei Verriegelungsbolzen 3, welche in Querrichtung Y versetzt zueinander angeordnet sind. Die Verriegelungsvorrichtung weist auch einen zweiten Schlitten 22 auf, welcher in Längsrichtung X relativ zu der Bodenplatte 8 beweglich ist. Der zweite Schlitten 22 umfasst ebenfalls zwei Verriegelungsbolzen 3, welche in Querrichtung Y versetzt zueinander angeordnet sind.

Das fahrerlose Transportfahrzeug weist einen ersten Dorn 11 und einen zweiten Dorn 12 auf, welche sich parallel zueinander in Vertikalrichtung Z erstrecken. Die Dorne 11, 12 sind in Längsrichtung X versetzt zueinander angeordnet. Der erste Dorn 11 ist dabei in Vertikalrichtung Z in die erste Einführöffnung 51 der Bodenplatte 8 eingeführt, und der zweite Dorn 12 ist in Vertikalrichtung Z in die zweite Einführöffnung 52 der Bodenplatte 8 eingeführt.

Beim Einführen des ersten Dorns 11 in die erste Einführöffnung 51 erfolgt eine Bewegung des ersten Schlittens 21 in Längsrichtung X entgegen einer Federkraft. Der erste Schlitten 21 wird dabei derart von der ersten Stirnseite 81 weg bewegt, dass die Verriegelungsbolzen 3 des ersten Schlittens 21 sich vollständig innerhalb der Bodenplatte 8 befinden.

Beim Einführen des zweiten Dorns 12 in die zweite Einführöffnung 52 erfolgt eine Bewegung des zweiten Schlittens 22 in Längsrichtung X entgegen einer Federkraft. Der zweite Schlitten 22 wird dabei derart von der zweiten Stirnseite 82 weg bewegt, dass die Verriegelungsbolzen 3 des zweiten Schlittens 21 sich vollständig innerhalb der Bodenplatte 8 befinden.

Die Verriegelungsvorrichtung weist mehrere, vorliegend vier, Rastbolzen 4 auf. Die Rastbolzen 4 sind jeweils in Längsrichtung X relativ zu der Bodenplatte 8 beweglich und werden von einer Federkraft beaufschlagt.

Zwei Rastbolzen 4 sind in Querrichtung Y versetzt zueinander angeordnet und werden von einer Federkraft derart beaufschlagt, dass bei Abwesenheit einer Gegenkraft die besagten Rastbolzen 4 in der Längsrichtung X teilweise aus der ersten Stirnseite 81 der Bodenplatte 8 heraus ragen. In der hier gezeigten Darstellung ragen die besagten Rastbolzen 4 in der Längsrichtung X teilweise aus der ersten Stirnseite 81 der Bodenplatte 8 heraus.

Zwei weitere Rastbolzen 4 sind ebenfalls in Querrichtung Y versetzt zueinander angeordnet und werden von einer Federkraft derart beaufschlagt, dass bei Abwesenheit einer Gegenkraft die besagten Rastbolzen 4 in der Längsrichtung X teilweise aus der zweiten Stirnseite 82 der Bodenplatte 8 heraus ragten. In der hier gezeigten Darstellung ragen die besagten Rastbolzen 4 in der Längsrichtung X teilweise aus der zweiten Stirnseite 82 der Bodenplatte 8 heraus.

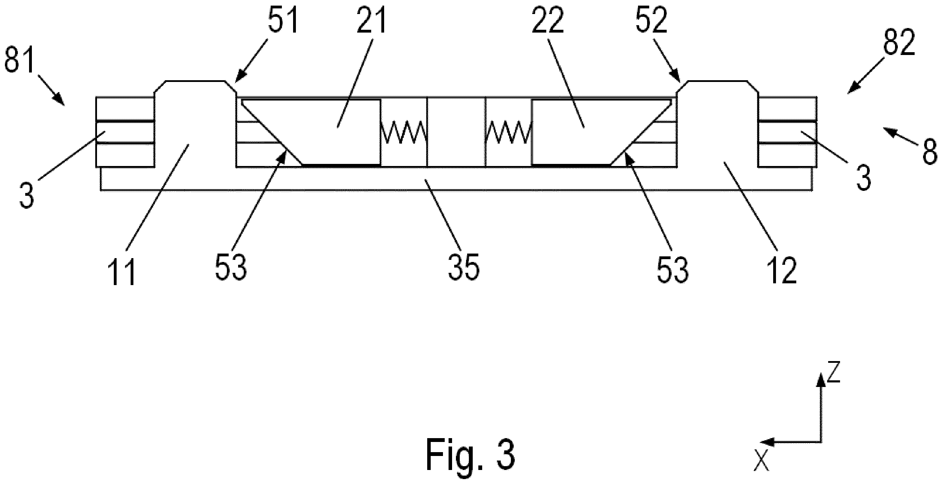

Figur 3 zeigt eine Schnittdarstellung entlang der Schnittlinie A-A in Figur 2. Der erste Schlitten 21 weist eine Kontaktfläche 53 zum Kontakt mit einem Dorn 11, 12 auf. Die Kontaktfläche 53 des ersten Schlittens 21 verläuft geneigt zu der Längsrichtung X und geneigt zu der Vertikalrichtung Z. Der zweite Schlitten 22 weist ebenfalls eine Kontaktfläche 53 zum Kontakt mit einem Dorn 11, 12 auf. Die Kontaktfläche 53 des zweiten Schlittens 22 verläuft geneigt zu der Längsrichtung X und geneigt zu der Vertikalrichtung Z.

Die Dorne 11, 12 sind auf einer Hubplatte 35 des fahrerlosen Transportfahrzeugs angeordnet. Wie bereits erwähnt, sind die Dorne 11, 12 in Vertikalrichtung Z in die Einführöffnungen 51, 52 der Bodenplatte 8 eingeführt. Dadurch ist der Transportbehälter 20 auf dem fahrerlosen Transportfahrzeug fixiert und gegen eine Verschiebung in horizontaler Richtung gesichert.

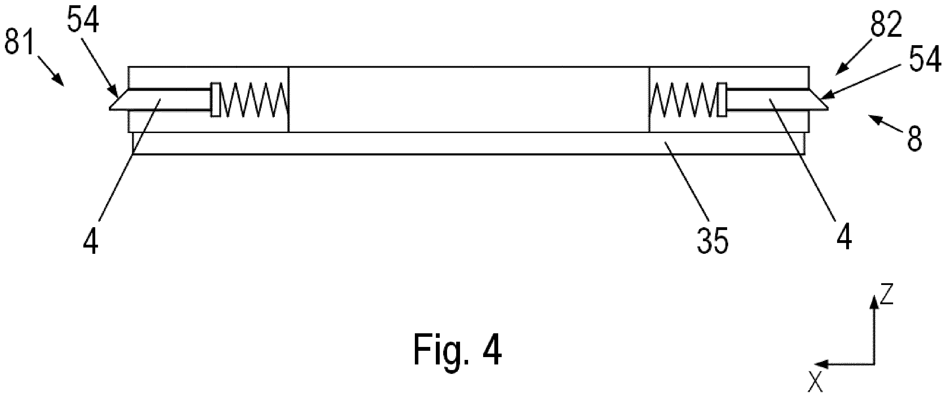

Figur 4 zeigt eine Schnittdarstellung entlang der Schnittlinie B-B in Figur 2. Die Rastbolzen 4 weisen jeweils eine Rastfläche 54 zum Kontakt mit einer Nutschiene 5 der Übergabestation 40 auf. Die Rastflächen 54 verlaufen dabei geneigt zu der Längsrichtung X und geneigt zu der Vertikalrichtung Z.

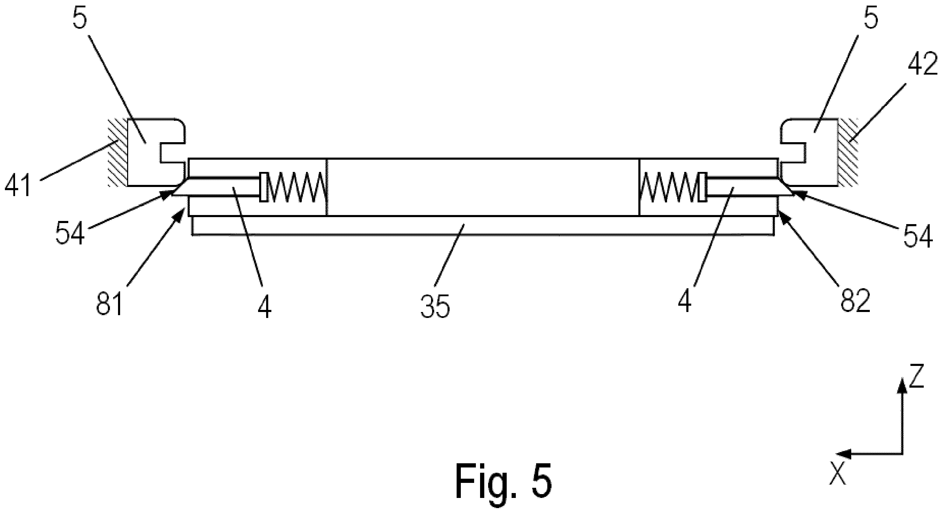

Figur 5 zeigt eine weitere Schnittdarstellung entlang der Schnittlinie B-B in Figur 2. Das fahrerlose Transportfahrzeug mit dem Transportbehälter 20 befindet sich in der Übergabestation 40. Die Übergabestation 40 weist zwei Nutschienen 5 auf, welche zur Verriegelung des Transportbehälters 20 mit den Verriegelungsbolzen 3 und mit den Rastbolzen 4 der Verriegelungsvorrichtung des Transportbehälters 20 zusammenwirken. Dabei ist eine der Nutschienen 5 an dem ersten Seitenschenkel 41 angeordnet, und eine der Nutschienen 5 ist an dem zweiten Seitenschenkel 42 angeordnet. Die Nutschienen 5 weisen eine U-förmigen Querschnitt auf und erstrecken sich parallel zueinander in Querrichtung Y.

Mittels der Hubeinheit wird die Hubplatte 35 mit dem darauf befindlichen Transportbehälter 20 in die Vertikalrichtung Z nach oben bewegt. Die Rastflächen 54 der Rastbolzen 4 kommen dabei in Kontakt mit den Nutschienen 5. Dadurch wird eine Gegenkraft erzeugt, welche die Rastbolzen 4 entgegen der Federkraft in die Bodenplatte 8 hinein drückt.

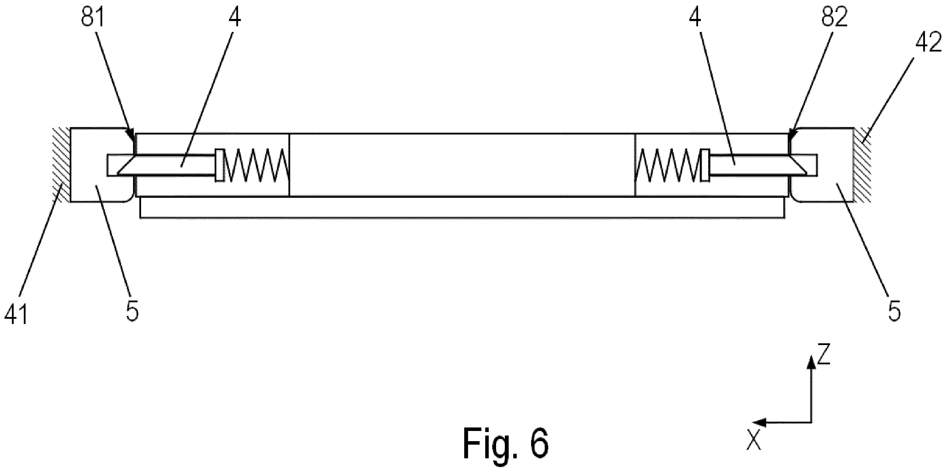

Figur 6 zeigt eine weitere Schnittdarstellung entlang der Schnittlinie B-B in Figur 2. Der Transportbehälter 20 ist in Vertikalrichtung Z derart nach oben bewegt, dass die Rastflächen 54 keinen Kontakt mit den Nutschienen 5 haben. Die Rastbolzen 4 werden von der jeweiligen Federkraft aus den Stirnseiten 81, 82 heraus bewegt und rasten in den Nutschienen 5 ein. Der Transportbehälter 20 ist somit in der Übergabestation 40 fixiert.

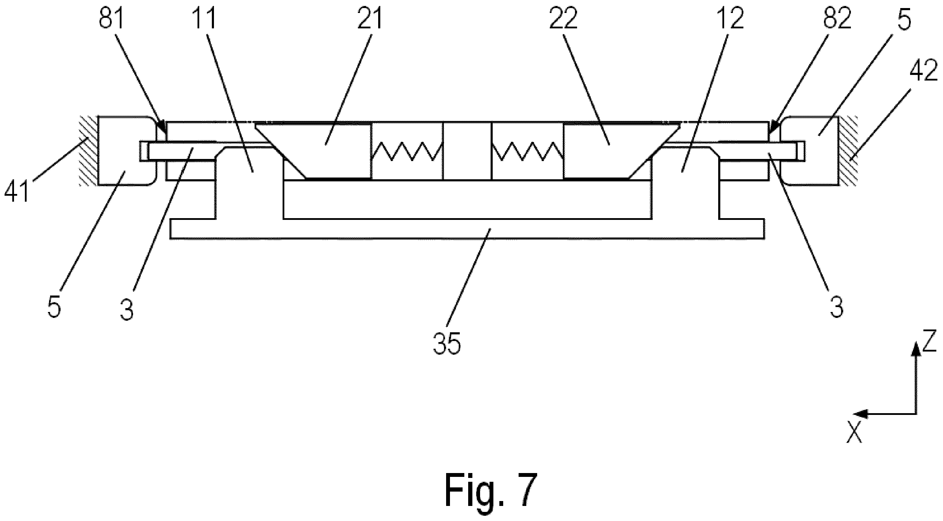

Figur 7 zeigt eine weitere Schnittdarstellung entlang der Schnittlinie A-A in Figur 2. Mittels der Hubeinheit wird die Hubplatte 35 in die Vertikalrichtung Z nach unten bewegt. Der Transportbehälter 20 verbleibt dabei in der Übergabestation 40. Die Dorne 11, 12 werden dabei aus den Einführöffnungen 51, 52 heraus gezogen.

Die Kontaktfläche 53 des ersten Schlittens 21 gleitet an dem ersten Dorn 11 ab. Dadurch werden die Verriegelungsbolzen 3 des ersten Schlittens 21 von der Federkraft aus der ersten Stirnseite 81 der Bodenplatte 8 heraus gedrückt. Die Kontaktfläche 53 des zweiten Schlittens 22 gleitet an dem zweiten Dorn 12 ab. Dadurch werden die Verriegelungsbolzen 3 des zweiten Schlittens 22 von der Federkraft aus der zweiten Stirnseite 82 der Bodenplatte 8 heraus gedrückt.

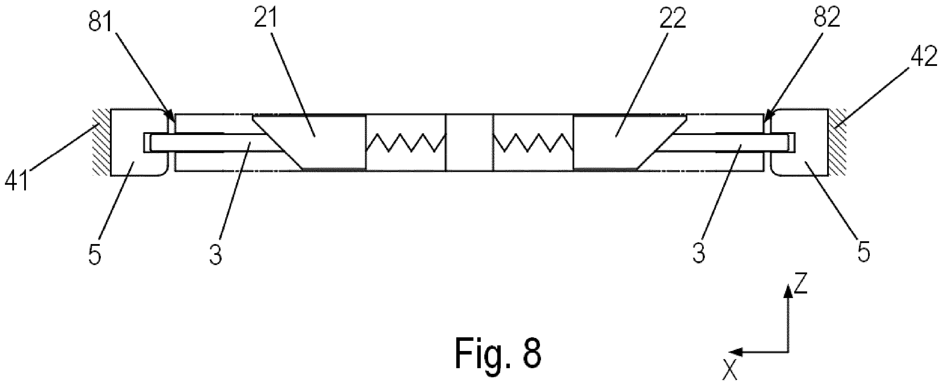

Figur 8 zeigt eine weitere Schnittdarstellung entlang der Schnittlinie A-A in Figur 2. Die Dorne 11, 12 sind vollständig aus den Einführöffnungen 51, 52 entfernt. Das fahrerlose Transportfahrzeug verlässt die Übergabestation 40.

Bei Abwesenheit des ersten Dorns 11 in der ersten Einführöffnung 51 beaufschlagt die Federkraft den ersten Schlitten 21 derart, dass die Verriegelungsbolzen 3 des ersten Schlittens 21 in der Längsrichtung X teilweise aus der ersten Stirnseite 81 der Bodenplatte 8 heraus und in die Nutschiene 5 hinein ragen. Bei Abwesenheit des zweiten Dorns 11 in der zweiten Einführöffnung 52 beaufschlagt die Federkraft den zweiten Schlitten 22 derart, dass die Verriegelungsbolzen 3 des zweiten Schlittens 22 in der Längsrichtung X teilweise aus der zweiten Stirnseite 82 der Bodenplatte 8 heraus und in die Nutschiene 5 hinein ragen.

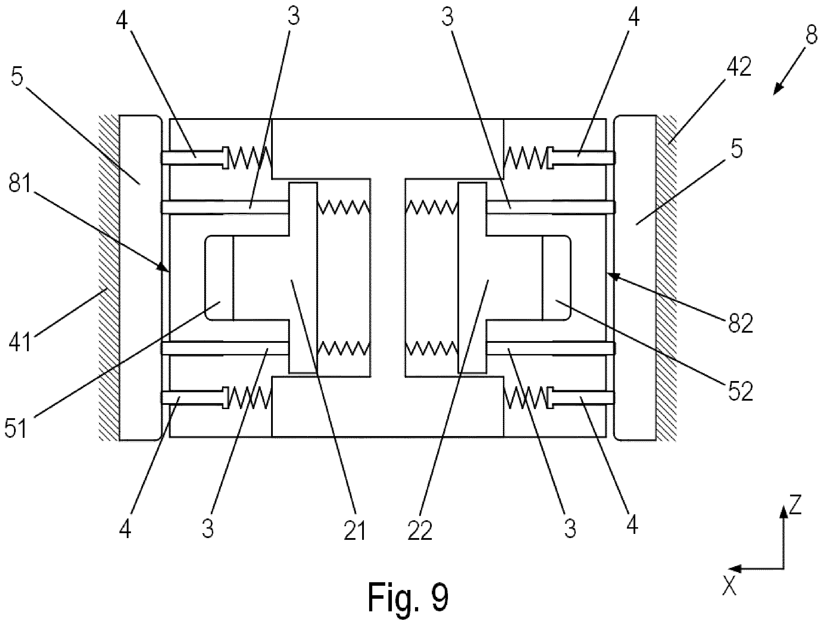

Figur 9 zeigt eine weitere Draufsicht auf die Bodenplatte 8 des Transportbehälters 20. Die Einführöffnungen 51, 52 sind frei von Dornen 11, 12. Die Rastbolzen 4 ragen aus den Stirnseiten 81, 82 heraus in die Nutschienen 5 hinein. Die Verriegelungsbolzen 3 der Schlitten 22 ragen ebenfalls aus den Stirnseiten 81, 82 heraus in die Nutschienen 5 hinein. Die Rastbolzen 3 und die Verriegelungsbolzen 3 sind dabei durch entsprechende Federkräfte vorgespannt. Der Transportbehälter 20 ist somit mittels der Verriegelungsvorrichtung mit der Übergabestation 40 verriegelt und gegen Diebstahl geschützt.

Zur Aufnahme des Transportbehälters 20 von der Übergabestation 40 fährt das fahrerlose Transportfahrzeug in die Übergabestation 40 unter den Transportbehälter 20, so dass der erste Dorn 11 mit der ersten Einführöffnungen 51 fluchtet, und der zweite Dorn 12 mit der zweiten Einführöffnungen 52 fluchtet. Mittels der Hubeinheit wird die Hubplatte 35 dann in Vertikalrichtung Z nach oben bewegt.

Dabei werden die Dorne 11, 12 in die Einführöffnungen 51, 52 der Bodenplatte 8 eingeführt. Dadurch gleiten die Kontaktfläche 53 der Schlitten 21, 22 an den Dornen 11, 12 ab. Dadurch werden die Verriegelungsbolzen 3 der Schlitten 21, 22 entgegen der Federkraft aus den Nutschienen 5 heraus und in die Bodenplatte 8 hinein gedrückt. Diese Situation ist auch in Figur 7 dargestellt.

Wenn die Dorne 11, 12 vollständig in die Einführöffnungen 51, 52 eingeführt sind liegt die Bodenplatte 8 auf der Hubplatte 35 auf. Die Verriegelungsbolzen 3 der Schlitten 21, 22 sind entgegen der Federkraft vollständig in die Bodenplatte 8 hinein gedrückt. Diese Situation ist auch in Figur 3 dargestellt.

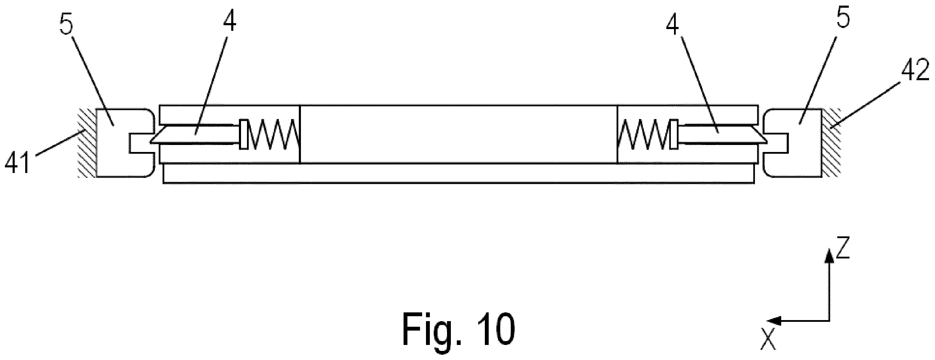

Figur 10 zeigt eine weitere Schnittdarstellung entlang der Schnittlinie B-B in Figur 2. Mittels der Hubeinheit wird die Hubplatte 35 mit dem darauf befindlichen Transportbehälter 20 weiter in die Vertikalrichtung Z nach oben bewegt. Die Rastflächen 54 der Rastbolzen 4 kommen dabei wieder in Kontakt mit den Nutschienen 5. Dadurch wird eine Gegenkraft erzeugt, welche die Rastbolzen 4 entgegen der Federkraft in die Bodenplatte 8 hinein drückt.

Die Hubplatte 35 wird nun mit dem darauf befindlichen Transportbehälter 20 noch weiter in die Vertikalrichtung Z nach oben bewegt, bis die Rastflächen 54 keinen Kontakt mehr mit den Nutschienen 5 haben. Die Rastbolzen 4 werden von der jeweiligen Federkraft aus den Stirnseiten 81, 82 heraus bewegt. Diese Situation ist auch in Figur 4 dargestellt.

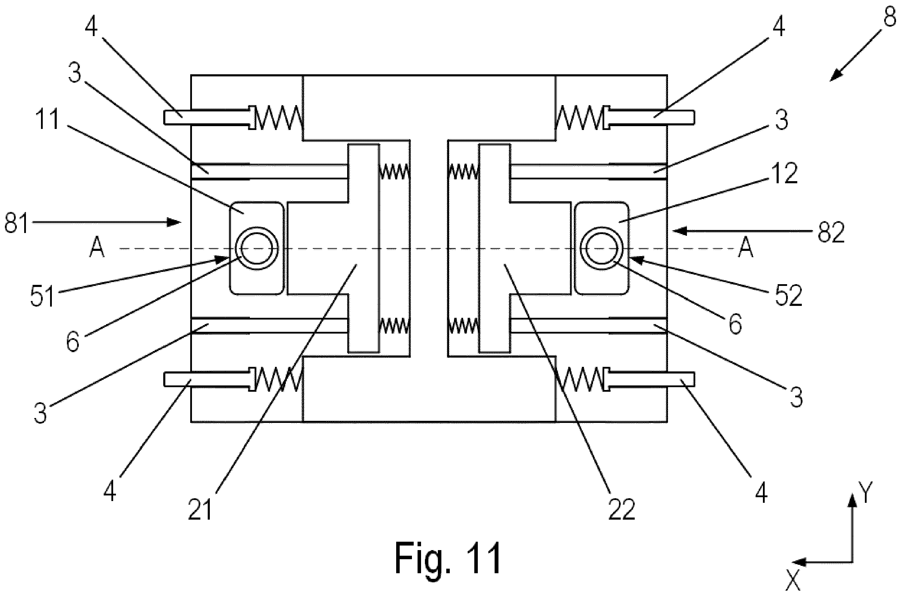

Figur 11 zeigt einen Schnitt durch eine Bodenplatte 8 mit einer Verriegelungsvorrichtung eines Transportbehälters 20 auf einer Hubplatte 35 eines fahrerlosen Transportfahrzeugs gemäß einer Abwandlung. Die Dorne 11, 12 weisen jeweils einen Magnet 6 auf. Die Magnete 6 sind mittig in den Dornen 11, 12 angeordnet und schließen in Vertikalrichtung Z bündig mit Oberflächen der Dorne 11, 12 ab.

Die Magnete 6 sind beispielsweise als Elektromagnete in Form von Wicklungen ausgebildet. Alternativ sind die Magnete 6 als Permanentmagnete ausgebildet. Vorzugsweise umfassen die Magnete 6 jeweils einen Permanentmagnet, welcher von einer Wicklung umgeben ist. Wenn kein Strom durch die Wicklungen fließt, so wirken die Permanentmagnete. Durch entsprechende Bestromung der Wicklungen sind die von den Permanentmagneten erzeugten Magnetfelder kompensierbar.

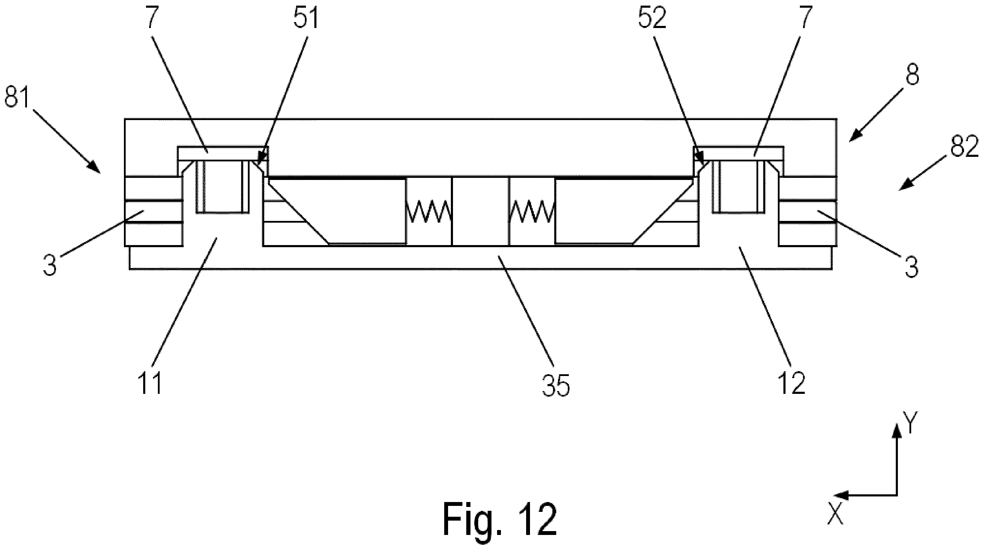

Figur 12 zeigt eine Schnittdarstellung entlang der Schnittlinie A-A in Figur 11. Die Verriegelungsvorrichtung des Transportbehälters 20 weist zwei Anzugsplatten 7 aus einem ferromagnetischen Material auf, welche derart angeordnet sind, dass die in die Einführöffnungen 51, 52 eingeführten Dorne 11, 12 in Kontakt mit den Anzugsplatten 7 gelangen.

Beim Einführen der Dorne 11, 12 in die Einführöffnungen 51, 52 der Bodenplatte 8 wirken die Magnete 6 mit den Anzugsplatten 7 des Transportbehälters 20 zusammen. Die Anzugsplatten 7 werden durch magnetische Kräfte von den Magneten 6 angezogen. Dadurch ist die Transportbox 20 auf dem fahrerlosen Transportfahrzeug gesichert.

Gemäß einer weiteren Abwandlung ist die Hubplatte 35 des fahrerlosen Transportfahrzeugs aus einem ferromagnetischen Material gefertigt. Die Dorne 11, 12 sind dabei ebenfalls aus einem ferromagnetischen Material gefertigt. Die Verriegelungsvorrichtung des Transportbehälters 20 weist eine Anzugsplatte 7 aus einem ferromagnetischen Material auf, welche sich über beide Einführöffnungen 51, 52 ausdehnt. Die in die Einführöffnungen 51, 52 eingeführten Dorne 11, 12 gelangen somit in Kontakt mit der Anzugsplatte 7.

Bei entsprechender Ausrichtung der Magnete 6 entsteht dabei ein magnetischer Kreis durch die Dorne 11, 12, die Hubplatte 35 und die Anzugsplatte 7. Wenn die Magnete 6 als Permanentmagnete ausgebildet sind, so sind die Magnete 6 derart auszurichten, dass der Südpol des einen Magneten 6 der Hubplatte 35 zugewandt ist, und dass der Nordpol des anderen Magneten 6 der Hubplatte 35 zugewandt ist. Wenn die Magnete 6 als Elektromagnete ausgebildet sind und mit Gleichstrom betrieben werden, so sind die Magnete 6 derart anzusteuern, dass der Südpol des einen Magneten 6 der Hubplatte 35 zugewandt ist, und dass der Nordpol des anderen Magneten 6 der Hubplatte 35 zugewandt ist. Wenn die Magnete 6 als Elektromagnete ausgebildet sind und mit Wechselstrom betrieben werden, so sind die Magnete 6 derart anzusteuern, dass der Südpol des einen Magneten 6 der Hubplatte 35 zugewandt ist, während der Nordpol des anderen Magneten 6 der Hubplatte 35 zugewandt ist.

### Bezugszeichenliste

- 3: Verriegelungsbolzen
- 4: Rastbolzen
- 5: Nutschiene
- 6: Magnet
- 7: Anzugsplatte
- 8: Bodenplatte
- 10: System zum Transport von Waren
- 11: erster Dorn
- 12: zweiter Dorn
- 20: Transportbehälter
- 21: erster Schlitten
- 22: zweiter Schlitten
- 23: Grundgehäuse
- 24: Deckel
- 35: Hubplatte
- 40: Übergabestation
- 41: erster Seitenschenkel
- 42: zweiter Seitenschenkel
- 43: dritter Seitenschenkel
- 51: erste Einführöffnung
- 52: zweite Einführöffnung
- 53: Kontaktfläche
- 54: Rastfläche
- 81: erste Stirnseite
- 82: zweite Stirnseite

- A, B: Schnittlinien
- X: Längsrichtung
- Y: Querrichtung
- Z: Vertikalrichtung

## Patentansprüche

1. Transportbehälter (20) zur Aufnahme von Waren, umfassend
eine Bodenplatte (8) und
eine Verriegelungsvorrichtung zur Verriegelung mit einer Übergabestation (40), wobei
die Verriegelungsvorrichtung
mindestens einen in eine Längsrichtung (X) relativ zu der Bodenplatte (8) beweglichen Schlitten (21, 22) aufweist, **dadurch gekennzeichnet, dass** der mindestens eine Schlitten (21,22) mindestens einen Verriegelungsbolzen (3) umfasst, und dass
der mindestens eine Schlitten (21, 22) derart angeordnet und ausgestaltet ist, dass beim Einführen eines Dorns (11, 12) in eine Einführöffnung (51, 52) der Bodenplatte (8) in eine Vertikalrichtung (Z) eine Bewegung des mindestens einen Schlittens (21, 22) in die Längsrichtung (X) entgegen einer Federkraft erfolgt, und dass
bei Abwesenheit eines Dorns (11, 12) in der Einführöffnung (51, 52) die Federkraft den mindestens einen Schlitten (21, 22) derart beaufschlagt, dass
der mindestens eine Verriegelungsbolzen (3) in der Längsrichtung (X) teilweise aus einer Stirnseite (81, 82) der Bodenplatte (8) heraus ragt.

2. Transportbehälter (20) nach Anspruch 1, **dadurch gekennzeichnet, dass** der mindestens eine Schlitten (21, 22) eine Kontaktfläche (53) zum Kontakt mit einem Dorn (11, 12) aufweist, wobei
die Kontaktfläche (53) geneigt zu der Längsrichtung (X) und geneigt zu der Vertikalrichtung (Z) verläuft.

3. Transportbehälter (20) nach einem der vorangegangenen Ansprüche,
**dadurch gekennzeichnet, dass**
der mindestens eine Schlitten (21, 22) zwei Verriegelungsbolzen (3) umfasst, welche in einer Querrichtung (Y) versetzt zueinander angeordnet sind.

4. Transportbehälter (20) nach einem der vorangegangenen Ansprüche,
**dadurch gekennzeichnet, dass**
die Verriegelungsvorrichtung einen ersten Schlitten (21) und einen zweiten Schlitten (22) aufweist, welche derart angeordnet und ausgestaltet sind, dass
beim Einführen eines Dorns (11, 12) in eine erste Einführöffnung (51) der Bodenplatte (8) in die Vertikalrichtung (Z) eine Bewegung des ersten Schlittens (21) in die Längsrichtung (X) entgegen einer Federkraft erfolgt, und dass
bei Abwesenheit eines Dorns (11, 12) in der ersten Einführöffnung (51) die Federkraft den ersten Schlitten (21) derart beaufschlagt, dass
der mindestens eine Verriegelungsbolzen (3) des ersten Schlittens (21) in der Längsrichtung (X) teilweise aus einer ersten Stirnseite (81) der Bodenplatte (8) heraus ragt, und dass
beim Einführen eines Dorns (11, 12) in eine zweite Einführöffnung (52) der Bodenplatte (8) in die Vertikalrichtung (Z) eine Bewegung des zweiten Schlittens (22) in die Längsrichtung (X) entgegen einer Federkraft erfolgt, und dass
bei Abwesenheit eines Dorns (11, 12) in der zweiten Einführöffnung (52) die Federkraft den zweiten Schlitten (22) derart beaufschlagt, dass
der mindestens eine Verriegelungsbolzen (3) des zweiten Schlittens (22) in der Längsrichtung (X) teilweise aus einer zweiten Stirnseite (82) der Bodenplatte (8) heraus ragt.

5. Transportbehälter (20) nach einem der vorangegangenen Ansprüche,
**dadurch gekennzeichnet, dass**
die Verriegelungsvorrichtung mindestens einen in die Längsrichtung (X) relativ zu der Bodenplatte (8) beweglichen Rastbolzen (4) aufweist, wobei
eine Federkraft den mindestens einen Rastbolzen (4) derart beaufschlagt, dass bei Abwesenheit einer Gegenkraft der mindestens eine Rastbolzen (4) in der Längsrichtung (X) teilweise aus einer Stirnseite (81, 82) der Bodenplatte (8) heraus ragt.

6. Transportbehälter (20) nach Anspruch 5, **dadurch gekennzeichnet, dass** der mindestens eine Rastbolzen (4) eine Rastfläche (54) zum Kontakt mit einer Nutschiene (5) aufweist, wobei
die Rastfläche (54) geneigt zu der Längsrichtung (X) und geneigt zu der Vertikalrichtung (Z) verläuft.

7. Transportbehälter (20) nach einem der Ansprüche 5 bis 6, **dadurch gekennzeichnet, dass** die Verriegelungsvorrichtung mindestens zwei Rastbolzen (4) aufweist, welche in einer Querrichtung (Y) versetzt zueinander angeordnet sind.

8. Transportbehälter (20) nach einem der vorangegangenen Ansprüche,
**dadurch gekennzeichnet, dass**
die Verriegelungsvorrichtung mindestens zwei Rastbolzen (4) aufweist, wobei eine Federkraft einen der Rastbolzen (4) derart beaufschlagt, dass
bei Abwesenheit einer Gegenkraft der besagte Rastbolzen (4) in der Längsrichtung (X) teilweise aus einer ersten Stirnseite (81) der Bodenplatte (8) heraus ragt, und wobei eine Federkraft einen der Rastbolzen (4) derart beaufschlagt, dass
bei Abwesenheit einer Gegenkraft der besagte Rastbolzen (4) in der Längsrichtung (X) teilweise aus einer zweiten Stirnseite (82) der Bodenplatte (8) heraus ragt.

9. Transportbehälter (20) nach einem der vorangegangenen Ansprüche,
**dadurch gekennzeichnet, dass**
die Verriegelungsvorrichtung mindestens eine Anzugsplatte (7) aus einem ferromagnetischen Material aufweist, welche derart angeordnet ist, dass ein in die Einführöffnung (51, 52) eingeführter Dorn (11, 12) in Kontakt mit der Anzugsplatte (7) gelangt.

10. System (10) zum Transport von Waren, umfassend
mindestens einen Transportbehälter (20) nach einem der vorangegangenen Ansprüche, mindestens ein fahrerloses Transportfahrzeug zum Transport des mindestens einen Transportbehälters (20) und
mindestens eine Übergabestation (40), mit welcher der mindestens eine Transportbehälter (20) verriegelbar ist.

11. System (10) nach Anspruch 10, **dadurch gekennzeichnet, dass**
die mindestens eine Übergabestation (40) mindestens eine Nutschiene (5) aufweist, welche zur Verriegelung eines Transportbehälters (20) mit der Übergabestation (40) mit mindestens einem Verriegelungsbolzen (3) und/oder
mit mindestens einem Rastbolzen (4)
der Verriegelungsvorrichtung des Transportbehälters (20) zusammenwirkt.

12. System (10) nach einem der Ansprüche 10 bis 11, **dadurch gekennzeichnet, dass** das mindestens eine fahrerlose Transportfahrzeug einen ersten Dorn (11) und einen zweiten Dorn (12) aufweist, wobei
die Dorne (11, 12) derart angeordnet und ausgestaltet sind, dass
die Dorne (11, 12) gleichzeitig in je eine Einführöffnung (51, 52) der Bodenplatte (8) eines Transportbehälters (20) einführbar sind.

13. System (10) nach Anspruch 12, **dadurch gekennzeichnet, dass**
mindestens einer der Dorne (11, 12) einen Magnet (6) aufweist, wobei
der Magnet (6) beim Einführen des Dorns (11, 12) in die Einführöffnung (51, 52) der Bodenplatte (8) mit mindestens einer Anzugsplatte (7) des Transportbehälters (20) zusammenwirkt.

14. System (10) nach einem der Ansprüche 12 bis 13, **dadurch gekennzeichnet, dass** das mindestens eine fahrerloses Transportfahrzeug eine Hubplatte (35) aus einem ferromagnetischen Material aufweist, auf welcher die Dorne (11, 12) angeordnet sind, und dass die Dorne (11, 12) aus einem ferromagnetischen Material gefertigt sind.

## Claims

1. A transport container (20) for receiving goods, comprising a base plate (8) and a locking device for locking to a transfer station (40), wherein the locking device has at least one slide (21, 22), movable in a longitudinal direction (X) relative to the base plate (8), **characterised in that** the at least one slide (21, 22) comprises at least one locking bolt (3), and **in that** the at least one slide (21, 22) is arranged and configured such that, when a pin (11, 12) is inserted into an insertion opening (51, 52) of the base plate (8) in a vertical direction (Z), a movement of the at least one slide (21, 22) takes place in the longitudinal direction (X) counter to an elastic force, and that, when a pin (11, 12) is absent in the insertion opening (51, 52), the elastic force acts upon the at least one slide (21, 22) such that the at least one locking bolt (3) partially projects from an end face (81, 82) of the base plate (8) in the longitudinal direction (X).

2. A transport container (20) according to claim 1, **characterised in that** the at least one slide (21, 22) has a contact surface (53) for contact with a pin (11, 12), wherein the contact surface (53) runs at an incline to the longitudinal direction (X) and at an incline to the vertical direction (Z).

3. A transport container (20) according to any one of the preceding claims,
**characterised in that**
the at least one slide (21, 22) comprises two locking bolts (3) which are arranged offset from one another in a transverse direction (Y).

4. A transport container (20) according to any one of the preceding claims,
**characterised in that**
the locking device has a first slide (21) and a second slide (22), which are arranged and configured such that, when a pin (11, 12) is inserted into a first insertion opening (51) of the base plate (8) in the vertical direction (Z), a movement of the first slide (21) takes place in the longitudinal direction (X) counter to an elastic force, and that, when a pin (11, 12) is absent in the first insertion opening (51), the elastic force acts upon the first slide (21) such that the at least one locking bolt (3) of the first slide (21) partially projects from a first end face (81) of the base plate (8) in the longitudinal direction (X), and that, when a pin (11, 12) is inserted into a second insertion opening (52) of the base plate (8) in the vertical direction (Z), a movement of the second slide (22) takes place in the longitudinal direction (X) counter to an elastic force, and that, when a pin (11, 12) is absent in the second insertion opening (52), the elastic force acts upon the second slide (22) such that the at least one locking bolt (3) of the second slide (22) partially projects from a second end face (82) of the base plate (8) in the longitudinal direction (X).

5. A transport container (20) according to any one of the preceding claims,
**characterised in that**
the locking device has at least one catching bolt (4) movable in the longitudinal direction (X) relative to the base plate (8), wherein an elastic force acts upon the at least one catching bolt (4) such that the at least one catching bolt (4) partially projects from an end face (81, 82) of the base plate (8) in the longitudinal direction (X) in the absence of a counterforce.

6. A transport container (20) according to claim 5, **characterised in that** the at least one catching bolt (4) has a catching surface (54) for contact with a groove rail (5), wherein the catching surface (54) runs at an incline to the longitudinal direction (X) and at an incline to the vertical direction (Z).

7. A transport container (20) according to one of claims 5 to 6, **characterised in that** the locking device has at least two catching bolts (4) which are arranged offset from one another in a transverse direction (Y).

8. A transport container (20) according to any one of the preceding claims,
**characterised in that**
the locking device has at least two catching bolts (4), wherein an elastic force acts upon one of the catching bolts (4) such that the aforementioned catching bolt (4) partially projects from a first end face (81) of the base plate (8) in the longitudinal direction (X) in the absence of a counterforce, and wherein an elastic force acts upon one of the catching bolts (4) such that the aforementioned catching bolt (4) partially projects from a second end face (82) of the base plate (8) in the longitudinal direction (X) in the absence of a counterforce.

9. A transport container (20) according to any one of the preceding claims,
**characterised in that**
the locking device has at least one magnetic plate (7), made of a ferromagnetic material, which is arranged such that a pin (11, 12) inserted into the insertion opening (51, 52) comes into contact with the magnetic plate (7).

10. A system (10) for transporting goods, comprising at least one transport container (20) according to any one of the preceding claims, at least one driverless transport vehicle for transporting the at least one transport container (20) and at least one transfer station (40) to which the at least one transport container (20) can be locked.

11. A system (10) according to claim 10, **characterised in that** the at least one transfer station (40) has at least one groove rail (5) which in order to lock a transport container (20) to the transfer station (40) cooperates with at least one locking bolt (3) and/or with at least one catching bolt (4) of the locking device of the transport container (20).

12. A system (10) according to one of claims 10 to 11, **characterised in that** the at least one driverless transport vehicle has a first pin (11) and a second pin (12), wherein the pins (11, 12) are arranged and configured such that the pins (11, 12) are insertable simultaneously into a respective insertion opening (51, 52) of the base plate (8) of a transport container (20).

13. A system (10) according to claim 12, **characterised in that** at least one of the pins (11, 12) has a magnet (6), wherein when the pin (11, 12) is inserted into the insertion opening (51, 52) of the base plate (8), the magnet (6) cooperates with at least one magnetic plate (7) of the transport container (20).

14. A system (10) according to one of claims 12 to 13, **characterised in that** the at least one driverless transport vehicle has a lifting plate (35) made of a ferromagnetic material on which there are arranged the pins (11, 12), and **in that** the pins (11, 12) are likewise manufactured of a ferromagnetic material.

## Revendications

1. Conteneur de transport (20) destiné à recevoir des marchandises, comprenant une plaque de fond (8) et
un dispositif de verrouillage pour un verrouillage avec une station de transfert (40),
le dispositif de verrouillage présentant au moins un coulisseau (21, 22) mobile dans une direction longitudinale (X) par rapport à la plaque de fond (8), **caractérisé en ce que**
le au moins un coulisseau (21, 22) comprend au moins un boulon de verrouillage (3), et **en ce que** le au moins un coulisseau (21, 22) est agencé et conçu de manière à ce que
lors de l'introduction d'une broche (11, 12) dans une ouverture d'introduction (51, 52) de la plaque de fond (8) dans une direction verticale (Z), un déplacement du au moins un coulisseau (21, 22) dans la direction longitudinale (X) à l'encontre d'une force de ressort se produit, et **en ce que**
en l'absence d'un broche (11, 12) dans l'ouverture d'introduction (51, 52), la force de ressort sollicite le au moins un coulisseau (21, 22) de telle sorte que le au moins un boulon de verrouillage (3) fait saillie partiellement à partir d'une face frontale (81, 82) de la plaque de fond (8) dans la direction longitudinale (X).

2. Conteneur de transport (20) selon la revendication 1, **caractérisé en ce que** le au moins un coulisseau (21, 22) présente une surface de contact (53) pour un contact avec un broche (11, 12),
la surface de contact (53) étant inclinée par rapport à la direction longitudinale (X) et inclinée par rapport à la direction verticale (Z).

3. Conteneur de transport (20) selon l'une quelconque des revendications précédentes, **caractérisé en ce que**
le au moins un coulisseau (21, 22) comprend deux boulons de verrouillage (3) qui sont agencés décalés l'un par rapport à l'autre dans une direction transversale (Y).

4. Conteneur de transport (20) selon l'une quelconque des revendications précédentes, **caractérisé en ce que**
le dispositif de verrouillage présente un premier coulisseau (21) et un second coulisseau (22) qui sont agencés et conçus de telle sorte que
lors de l'introduction d'un broche (11, 12) dans une première ouverture d'introduction (51) de la plaque de fond (8) dans la direction verticale (Z), un déplacement du premier coulisseau (21) dans la direction longitudinale (X) à l'encontre d'une force de ressort se produit, et **en ce que**
en l'absence d'un broche (11, 12) dans la première ouverture d'introduction (51), la force de ressort sollicite le premier coulisseau (21) de telle sorte que le au moins un boulon de verrouillage (3) du premier coulisseau (21) fasse saillie partiellement à partir d'une première face frontale (81) de la plaque de fond (8) dans la direction longitudinale (X), et **en ce que**
lors de l'insertion d'un broche (11, 12) dans une seconde ouverture d'insertion (52) de la plaque de fond (8) dans la direction verticale (Z), un déplacement du coulisseau (22) dans la direction longitudinale (X) à l'encontre d'une force de ressort se produit, et **en ce que**
en l'absence d'un broche (11, 12) dans la seconde ouverture d'introduction (52), la force de ressort sollicite le second coulisseau (22) de telle sorte que le au moins un boulon de verrouillage (3) du second coulisseau (22) fasse saillie partiellement à partir d'une second face frontale (82) de la plaque de fond (8) dans la direction longitudinale (X).

5. Conteneur de transport (20) selon l'une quelconque des revendications précédentes, **caractérisé en ce que**
le dispositif de verrouillage présente au moins un boulon d'encliquetage (4) mobile dans la direction longitudinale (X) par rapport à la plaque de fond (8),
une force de ressort sollicitant le au moins un boulon d'encliquetage (4) de telle sorte que
en l'absence d'une force antagoniste, le au moins un boulon d'encliquetage (4) fasse saillie partiellement à partir d'une face frontale (81, 82) de la plaque de fond (8) dans la direction longitudinale (X).

6. Conteneur de transport (20) selon la revendication 5, **caractérisé en ce que** le au moins un boulon d'encliquetage (4) présente une surface d'encliquetage (54) pour une mise en contact avec un rail rainuré (5),
la surface d'encliquetage (54) étant inclinée par rapport à la direction longitudinale (X) et inclinée par rapport à la direction verticale (Z).

7. Conteneur de transport (20) selon l'une quelconque des revendications 5 à 6, **caractérisé en ce que**
le dispositif de verrouillage présente au moins deux boulons d'encliquetage (4) qui sont agencés décalés l'un par rapport à l'autre dans une direction transversale (Y).

8. Conteneur de transport (20) selon l'une quelconque des revendications précédentes, **caractérisé en ce que**
le dispositif de verrouillage présente au moins deux boulons d'encliquetage (4),
une force de ressort sollicitant l'un des boulons d'encliquetage (4) de telle sorte qu' en l'absence d'une force antagoniste, ledit boulon d'encliquetage (4) fasse saillie partiellement dans la direction longitudinale (X) d'une première face frontale (81) de la plaque de fond (8), et
une force de ressort sollicitant l'un des boulons d'encliquetage (4) de telle sorte que en l'absence d'une force antagoniste, ledit boulon d'arrêt (4) fasse saillie partiellement à partir d'une second face frontale (82) de la plaque de fond (8) dans la direction longitudinale (X).

9. Conteneur de transport (20) selon l'une quelconque des revendications précédentes, **caractérisé en ce que**
le dispositif de verrouillage présente au moins une plaque de serrage (7) en matériau ferromagnétique, qui est agencée de telle sorte qu'un broche (11, 12) introduite dans l'ouverture d'introduction (51, 52) vienne en contact avec la plaque de serrage (7).

10. Système (10) de transport de marchandises, comprenant au moins un conteneur de transport (20) selon l'une quelconque des revendications précédentes, au moins un véhicule de transport sans conducteur pour le transport d'au moins un conteneur de transport (20) et
au moins une station de transfert (40) avec laquelle le au moins un conteneur de transport (20) peut être verrouillé.

11. Système (10) selon la revendication 10, **caractérisé en ce que** la au moins une station de transfert (40) présente au moins un rail coulissant (5) qui coopère avec au moins un boulon de verrouillage (3) pour verrouiller le conteneur de transport (20) à la station de transfert (40) et/ou
qui coopère avec au moins un boulon d'encliquetage (4) du dispositif de verrouillage du conteneur de transport (20).

12. Système (10) selon l'une quelconque des revendications 10 à 11, **caractérisé en ce que**
le au moins un véhicule de transport sans conducteur présente une première broche (11) et une seconde broche (12),
les broches (11, 12) étant agencées et conçues de telle sorte que les broches (11, 12) puissent être insérées simultanément dans une ouverture d'introduction (51, 52) de la plaque de fond (8) d'un conteneur de transport (20).

13. Système (10) selon la revendication 12, **caractérisé en ce que** au moins l'un des broches (11, 12) présente un aimant (6),
l'aimant (6) coopérant avec au moins une plaque de serrage (7) du conteneur de transport (20) lors de l'insertion du broche (11, 12) dans l'ouverture d'insertion (51, 52) de la plaque de fond (8).

14. Système (10) selon l'une quelconque des revendications 12 à 13, **caractérisé en ce que** le au moins un véhicule de transport sans conducteur comprend une plaque de levage (35) en matériau ferromagnétique sur laquelle sont agencées les broches (11, 12), et **en ce que** les broches (11, 12) sont fabriquées en matériau ferromagnétique.
